# FASCICULE DE BREVET EUROPEEN

(11) **EP 2 612 482 B1**
(45) Date de publication et mention de la délivrance du brevet: **07.10.2015**
(21) Numéro de dépôt: 11761673.0
(22) Date de dépôt: 26.08.2011
(51) Int. Cl.: H04L 12/24, H04L 29/06

(54) **PROCEDE DE TRAITEMENT DE MESSAGES SIP**
VERFAHREN ZUR VERARBEITUNG VON SIP-NACHRICHTEN
METHOD OF PROCESSING SIP MESSAGES

(30) Priorité: 01.09.2010 FR 1056921
(43) Date de publication de la demande: 10.07.2013
(73) Titulaire: Orange, 75015 Paris (FR)
(72) Inventeur: BOUVET, Bertrand, F-22700 Perros Guirec (FR); BONNAMY, Jean-Michel, 22300 PLOOUBEZRE (FR)
(74) Mandataire: Fontenelle, Sandrine
(86) Numéro de dépôt international: PCT/FR2011/051970
(87) Numéro de publication internationale: WO 2012/028807

(56) Documents cités:
- EP-A1- 1 806 900
- EP-A1- 1 944 922
- FR-A1- 2 909 820

## Description

### Arrière-plan de l'invention

L'invention se rapporte au domaine général des télécommunications. L'invention concerne en particulier la gestion de la qualité de service lors d'une communication entre un terminal relié à une passerelle résidentielle et un terminal distant, utilisant le protocole SIP.

De façon connue, une passerelle résidentielle reliée à un réseau distant permet à un terminal local d'établir une communication avec un terminal distant, en utilisant un protocole de voix sur IP (VoIP). Typiquement, le terminal local utilise le protocole SIP (normalisé et standardisé dans le document RFC 3161) pour établir la communication, en particulier pour négocier avec le terminal distant le ou les codecs qui seront utilisés.

Le terminal local comprend par exemple un agent SIP (UA pour « *User Agent*») interne à la passerelle, auquel est relié un téléphone analogique ou numérique. Dans ce cadre, la passerelle résidentielle peut détecter la bande passante de son accès au réseau Internet et proposer à l'agent SIP d'utiliser des codecs compatibles avec la bande passante détectée.

Par ailleurs, les utilisateurs souhaitent généralement utiliser plusieurs terminaux locaux reliés à la passerelle pour communiquer simultanément. Par exemple, un premier terminal comprend un agent SIP interne à la passerelle relié à un téléphone numérique ou analogique, alors que des terminaux supplémentaires sont des terminaux externes à la passerelle, constitués par un téléphone mobile multifonctions ou un ordinateur personnel exécutant un logiciel de téléphonie VoIP (« Softphone »), ou bien des terminaux matériels de type tablette, télévision de nouvelle génération,... Ces terminaux externes peuvent être reliés à la passerelle par une liaison sans fil, par exemple de type WiFi, ou une liaison filaire, par exemple de type Ethernet. Le document FR 2 909 820 décrit ainsi la configuration d'une passerelle résidentielle reliée à quatre terminaux locaux.

Dans une telle situation, il est connu de partager la bande passante de la liaison d'accès en attribuant un canal virtuel à chaque type de trafic. Ainsi, un canal virtuel conversationnel est dédié à l'agent SIP interne à la passerelle et un canal virtuel Internet est dédié au trafic provenant des terminaux externes. Le canal virtuel conversationnel est considéré prioritaire et est donc dimensionné pour une conversation téléphonique ou un appel de visiophonie, alors que le canal virtuel Internet fonctionne en mode « service au mieux ». Ainsi, si le canal virtuel conversationnel est utilisé par l'agent SIP interne pour une conversation, la bande passante disponible pour une communication téléphonique provenant d'un terminal externe peut être insuffisante, compte tenu du codec choisi, et la qualité de la conversation peut être dégradée.

Il est également connu d'utiliser un unique canal virtuel et de prioriser les différents types de trafic en utilisant un marquage des paquets IP et plusieurs files de traitement des paquets, offrant une priorisation. Dans ce cas, si une file prioritaire est dédiée à l'agent SIP interne et une file « service au mieux » au trafic Internet provenant des terminaux externes, on rencontre le même problème que dans le cas décrit précédemment, à savoir une possible dégradation de la qualité de la conversation avec un terminal externe. Si une même file est utilisée pour les conversations VoIP provenant de l'agent SIP interne et des terminaux externes, la qualité de toutes les conversations peut être dégradée en cas de conversations simultanées.

Il existe donc un besoin pour une meilleure gestion de la qualité de service lorsque plusieurs terminaux utilisent une même passerelle résidentielle pour des communications simultanées.

### Objet et résumé de l'invention

L'invention vise à fournir un procédé de traitement de messages SIP qui ne présente pas au moins certains des inconvénients précités. En particulier, l'invention vise à permettre de multiples communications simultanées sans dégradation de la qualité.

A cet effet, l'invention concerne un procédé de traitement de messages SIP exécuté par un noeud d'un réseau de télécommunication, le réseau comprenant une passerelle résidentielle reliée à un coeur de réseau IMS par une liaison d'accès, au moins un premier terminal SIP et un deuxième terminal SIP reliés localement à la passerelle résidentielle, le premier terminal SIP étant apte à établir une première session SIP vers le coeur de réseau IMS en passant par la liaison d'accès, le deuxième terminal SIP étant apte à établir une deuxième session SIP vers le coeur de réseau IMS en passant par la liaison d'accès, ce procédé de traitement comprenant une étape d'obtention d'une bande passante de la liaison d'accès, et étant caractérisé en ce qu'il comprend :
- une étape de réception d'un premier message SIP concernant la première session SIP,
- une étape de détermination de la bande passante utilisée par la première session SIP en fonction du premier message SIP,
- une étape de réception d'un deuxième message SIP concernant la deuxième session SIP,
- une étape de détermination d'une bande passante autorisée pour la deuxième session SIP en fonction du deuxième message SIP, de la bande passante de la liaison d'accès et de la bande passante utilisée par la première session SIP, et
- une étape d'envoi d'un troisième message SIP vers le premier terminal, le deuxième terminal ou le coeur de réseau IMS, le troisième message étant déterminé au moins en fonction de la bande passante autorisée pour la deuxième session SIP, le troisième message SIP étant destiné à influencer une sélection de la bande passante pour la première session SIP ou la deuxième session SIP.

Grâce à l'invention, en réponse à la réception du troisième message, la bande passante de la première session SIP ou de la deuxième session SIP peut être adaptée par le premier terminal, le deuxième terminal ou le coeur de réseau IMS, en tenant compte de la bande passante autorisée pour la deuxième session SIP. Ainsi, la bande passante utilisée par la deuxième session SIP est compatible avec la bande passante de la liaison d'accès, compte tenu de la bande passante utilisée par la première session SIP. Ainsi, l'invention permet d'éviter une dégradation de la qualité de service pour les deux sessions SIP.

Selon une première mise en oeuvre de l'invention, ce procédé de traitement est effectué en coupure des flux de signalisation SIP.

Ainsi, selon une variante, le deuxième message SIP est un message SIP INVITE émis par le deuxième terminal SIP et contenant un champ SDP indiquant les codecs souhaités par le deuxième terminal SIP, l'étape de détermination d'une bande passante autorisée pour la deuxième session SIP comprenant la sélection d'au moins un codec autorisé parmi les codecs souhaités, le troisième message SIP étant un message SIP INVITE émis vers le coeur de réseau IMS et contenant un champ SDP indiquant au moins un codec autorisé.

Cela permet de filtrer les codecs souhaités par le deuxième terminal SIP pour ne retenir que ceux qui sont compatibles avec la bande passante disponible.

Dans cette variante, le premier message SIP peut être un message SIP OK contenant un champ SDP indiquant le ou les codecs utilisés pour la première session SIP, la bande passante utilisée par la première session SIP étant déterminée en fonction du ou des codecs utilisés.

Cela permet une détermination précise de la bande passante effectivement utilisée par la première session SIP.

Selon un mode de réalisation, en réponse à la détermination d'une bande passante utilisée par la première session SIP plus faible qu'une bande passante précédemment utilisée par la première session SIP, le troisième message SIP est un message SIP Re-INVITE envoyé vers le deuxième terminal SIP et ne contenant pas de champ SDP.

Cela permet au deuxième terminal SIP de renégocier le ou les codecs utilisés pour la deuxième session SIP, et d'éventuellement utiliser un codec offrant une meilleure qualité de communication grâce à la bande passante disponible supplémentaire.

Par exemple, le premier message SIP peut être un message SIP BYE reçu du premier terminal SIP.

Cela indique que la première session SIP est terminée et n'utilise plus de bande passante. La qualité de la deuxième session SIP peut alors être fortement améliorée.

Selon un mode de réalisation, lorsque le deuxième message SIP contient une information indiquant que la deuxième session SIP est plus prioritaire que la première session SIP, le troisième message SIP est un message SIP Re-INVITE envoyé vers le premier terminal SIP et ne contenant pas de champ SDP.

Cela permet de forcer le premier terminal SIP à renégocier le ou les codecs utilisés pour la première session SIP, afin de diminuer la bande passante utilisée par la première session SIP et de libérer de la bande passante pour la deuxième session SIP.

Selon une autre mise en oeuvre de l'invention, le procédé est effectué par un module auprès duquel les terminaux SIP peuvent souscrire, au sens SIP. Ce module est apte à communiquer avec les terminaux SIP pour les informer des codecs qu'ils peuvent utiliser, compte tenu de la bande passante disponible. Les avantages mentionnés précédemment en rapport avec la première mise en oeuvre de l'invention se retrouvent de manière correspondante dans la deuxième mise en oeuvre de l'invention.

Ainsi, selon un mode de réalisation, le deuxième message SIP est un message SIP Subscribe émis par le deuxième terminal SIP et contenant un champ SDP indiquant les codecs souhaités par le deuxième terminal SIP, l'étape de détermination d'une bande passante autorisée pour la deuxième session SIP comprenant la sélection d'au moins un codec autorisé parmi les codecs souhaités, le troisième message SIP étant un message SIP Notify émis vers le deuxième terminal SIP et contenant un champ SDP indiquant ledit au moins un codec autorisé.

Le premier message SIP peut être un message SIP Subscribe contenant un champ SDP indiquant le ou les codecs utilisés pour la première session SIP, la bande passante utilisée par la première session SIP étant déterminée en fonction du ou des codecs utilisés.

Dans une variante, en réponse à la détermination d'une bande passante utilisée par la première session SIP plus faible qu'une bande passante précédemment utilisée par la première session SIP, le troisième message SIP est un message SIP Notify envoyé vers le deuxième terminal SIP et contenant un champ indiquant des codecs autorisés pour la deuxième session SIP.

Le premier message SIP peut être un message SIP Subscribe contenant un champ indiquant qu'au moins un codec précédemment utilisé par la première session SIP n'est plus utilisé.

Selon une variante, lorsque le deuxième message SIP contient une information indiquant que la deuxième session SIP est plus prioritaire que la première session SIP, le troisième message SIP est un message SIP Notify envoyé vers le premier terminal SIP et contenant un champ indiquant au moins un codec qui n'est plus autorisé pour la première session SIP.

Selon un mode de réalisation, le procédé de traitement comprend une étape d'envoi d'un message SIP Notify vers le premier ou deuxième terminal SIP, le message SIP Notify contenant au moins un codec autorisé, le premier ou deuxième terminal SIP étant apte à adapter une interface homme-machine en fonction dudit au moins un codec autorisé.

Corrélativement, l'invention concerne également un dispositif de traitement de messages SIP destiné à un réseau de télécommunication comprenant une passerelle résidentielle reliée à un coeur de réseau IMS par une liaison d'accès, au moins un premier terminal SIP et un deuxième terminal SIP reliés localement à la passerelle résidentielle, le premier terminal SIP étant apte à établir une première session SIP vers le coeur de réseau IMS en passant par la liaison d'accès, le deuxième terminal SIP étant apte à établir une deuxième session SIP vers le coeur de réseau IMS en passant par la liaison d'accès, le dispositif de traitement comprenant des moyens d'obtention d'une bande passante de la liaison d'accès,
le dispositif de traitement étant caractérisé en ce qu'il comprend :
- des moyens de réception d'un premier message SIP concernant la première session SIP,
- des moyens de détermination de la bande passante utilisée par la première session SIP en fonction du premier message SIP,
- des moyens de réception d'un deuxième message SIP concernant la deuxième session SIP,
- des moyens de détermination d'une bande passante autorisée pour la deuxième session SIP en fonction de la bande passante de la liaison d'accès et de la bande passante utilisée par la première session SIP, et
- des moyens d'envoi d'un troisième message SIP vers le premier terminal, le deuxième terminal ou le coeur de réseau IMS, le troisième message étant déterminé au moins en fonction de la bande passante autorisée pour la deuxième session SIP, le troisième message SIP étant destiné à influencer une sélection de la bande passante pour la première session SIP ou la deuxième session SIP.

Le dispositif de traitement peut être par exemple la passerelle résidentielle ou un serveur d'application relié au coeur de réseau IMS. Dans le premier cas, le premier terminal SIP et/ou le deuxième terminal SIP peut être interne à la passerelle et le premier message SIP, le deuxième message SIP et le troisième message SIP peuvent être des messages internes à la passerelle.

L'invention vise aussi un programme d'ordinateur comportant des instructions pour l'exécution des étapes du procédé de traitement précité lorsque le programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement, dans son environnement, une passerelle résidentielle mettant en oeuvre un procédé de traitement de messages SIP selon un mode de réalisation de l'invention,
- les figures 2 et 3 illustrent des messages échangés pendant l'exécution du procédé traitement de messages SIP mis en oeuvre par la passerelle de la figure 1,
- la figure 4 représente schématiquement, dans son environnement, une passerelle résidentielle mettant en oeuvre un procédé de traitement de messages SIP selon un autre mode de réalisation de l'invention, et
- les figures 5 à 8 illustrent des messages échangés pendant l'exécution du procédé traitement de messages SIP mis en oeuvre par la passerelle de la figure 4.

### Description détaillée de modes de réalisation

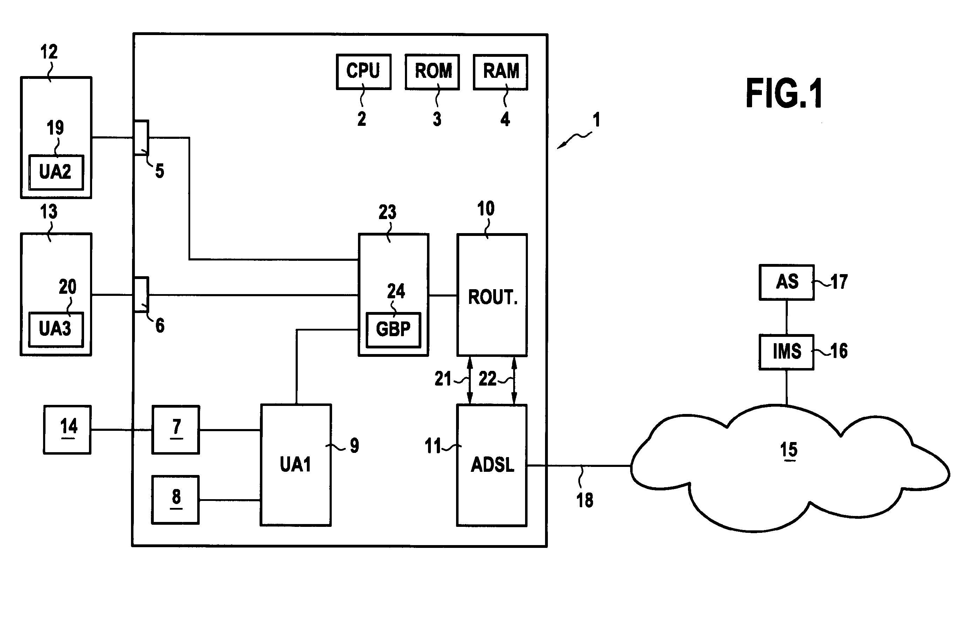

La **figure 1** représente une passerelle 1 résidentielle dans son environnement. La passerelle 1 présente l'architecture matérielle d'un ordinateur et comprend notamment un processeur 2, une mémoire morte 3 et une mémoire vive 4. La mémoire morte 3 mémorise un programme d'ordinateur comprenant des instructions pour l'exécution du procédé de traitement de messages SIP conforme à l'invention, qui sera décrit ultérieurement, et constitue un support d'information conforme à l'invention.

La passerelle 1 comprend également des interfaces 5, 6, 7 et 8 locales, un agent SIP 9 (« *User Agent*» UA1) interne, une passerelle SIP 23 intégrant un module de gestion de la bande passante 24 (GBP), un module de routage 10 et une interface ADSL 11.

Dans l'exemple décrit ici, la passerelle 1 est reliée à trois dispositifs de communication locaux, à savoir deux terminaux 12 et 13 prenant en charge le protocole SIP et à un téléphone 14 ne prenant pas en charge le protocole SIP.

Le terminal 12 est par exemple un téléphone multifonctions relié à l'interface 5 de la passerelle 1 par une liaison sans fil, par exemple une liaison Wifi. Le terminal 12 exécute un logiciel de voix sur IP et comprend ainsi un agent SIP 19 («*User Agent* » UA2). Le terminal 13 est par exemple un ordinateur personnel relié à l'interface 6 de la passerelle 1 par une liaison filaire, par exemple une liaison Ethernet. Le terminal 13 exécute un logiciel de voix sur IP et comprend ainsi un agent SIP 20 (« *User Agent*» UA3). Le téléphone 14 est par exemple un téléphone numérique relié par un câble USB à l'interface 7 ou, en variante, un téléphone analogique relié par un câble à l'interface 8, constituant un port FXS (pour « *Foreign eXchange Suscriber*»). Dans les deux cas, le téléphone 14 est relié à l'agent SIP 9 (UA1).

L'agent SIP 9 est relié à la passerelle SIP 23. Les agents SIP 19 et 20 peuvent également communiquer avec la passerelle SIP 23, par l'intermédiaire des interfaces 5 et 6. La passerelle SIP 23 est reliée au module de routage 10. Enfin, le module de routage 10 est relié à l'interface ADSL 11 qui permet à la passerelle 1, par une liaison d'accès 18, de communiquer avec des noeuds d'un réseau 15.

Le réseau 15 comprend notamment un réseau d'accès et un sous-réseau reposant sur une architecture IMS (pour « *IP MultiMedia Subsystem* »), telle que spécifiée dans les standards de normalisation 3GPP et TISPAN. De façon connue, une telle architecture s'appuie sur un coeur de réseau IMS 16 (aussi appelé réseau coeur IMS), qui comprend plusieurs entités fonctionnelles telles que par exemple une entité CSCF (« *Call Session Control Function* »), une entité BGCF (« *Breakout Gateway Control Function »),* et des serveurs d'application 17.

Le trafic SIP provenant des agents SIP 9, 19 et 20 est traité par la passerelle SIP 23 d'une manière décrite ultérieurement, puis relayé vers le module de routage 10. Ensuite, il est routé par le module de routage 10, par l'intermédiaire de l'interface ADSL 11 et de la liaison d'accès 18, vers le coeur de réseau IMS 16.

Le trafic SIP provenant du l'agent SIP 9 interne est considéré comme prioritaire par rapport au trafic SIP provenant des terminaux 12 et 13 externes. Ainsi, selon une première variante, le trafic SIP provenant de l'agent SIP 9 est routé vers l'interface ADSL 11 dans un canal virtuel conversationnel 21 auquel une bande passante prédéterminée est allouée, et le trafic SIP provenant des agents SIP 19 et 20 est routé vers l'interface ADSL dans un canal virtuel Internet 22 fonctionnant en mode « service au mieux ». Dans une autre variante, les trafics SIP sont priorisés en marquant les paquets IP et en dirigeant les paquets IP dans une file d'attente conversationnelle ou une file d'attente « service au mieux ». Dans les deux variantes, on peut considérer que le trafic SIP est dirigé vers une première interface ou une deuxième interface, de priorités différentes.

Comme annoncé précédemment, la passerelle SIP 23 effectue un traitement du trafic SIP. Plus précisément, le rôle du module de gestion de la bande passante 24 est notamment de :
- Détecter la bande passante globale à l'accès (BPGA) de la liaison d'accès 18,
- Détecter la bande passante par interface spécialisée (BPIS), c'est-à-dire les bandes passantes associées respectivement au canal virtuel conversationnel et au canal virtuel Internet dans le cadre de l'architecture à plusieurs canaux virtuels décrite précédemment, ou bien les bandes passantes affectées respectivement aux différentes files de trafic dans le cas d'une architecture à canal virtuel unique décrite précédemment,
- Estimer en temps réel la bande passante disponible sur l'accès global et/ou par interface spécialisée, par exemple sur la base des messages de signalisation SIP et/ou de l'analyse des trafics récurrents transmis/reçus au niveau des couches basses.

Le rôle de la passerelle SIP 23 est notamment de :
- Jouer le rôle SIP de « Back To Back User Agent » (B2BUA) vis-à-vis des agents SIP 9, 19 et 20,
- Détecter les messages de signalisation SIP INVITE, UPDATE, Re-INVITE, ACK et les réponses SIP, pour :
   - Extraire les champs SDP (pour « *Session Description Protocol»).*
   - Déterminer la bande passante correspondant aux SDP détectés.
   - Déterminer la liste de codecs effectivement utilisables, compte tenu de la bande passante disponible estimée par le module de gestion de la bande passante 24, et donc filtrer certains codecs dans les champs SDP avant de relayer les messages de signalisation.
- Emettre le message SIP Re-INVITE sans champs SDP pour forcer les agents SIP 9, 19 et 20 à renégocier la session dès lors que des événements spécifiques se produisent, afin d'optimiser la qualité de la session ou de forcer la suppression d'un flux lors que la bande passante utilisée par une session SIP est nécessaire à une autre session SIP.

La passerelle SIP 23 est par exemple réalisée sous la forme d'une ALG SIP (pour *« Application Layer Gateway»)* présentant des fonctions de gestion de la bande passante, soit parce qu'elle comprend le module de gestion de la bande passante 24 comme représenté sur la figure 1, soit parce qu'elle peut communiquer avec un module de gestion de la bande passante externe selon une variante non représentée.

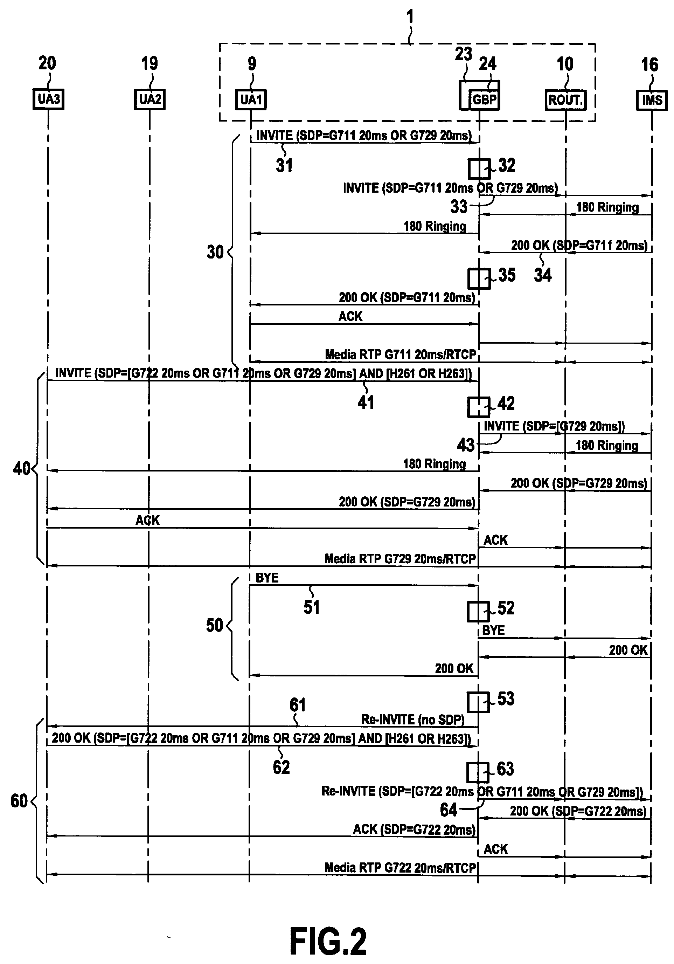

En référence à la **figure 2**, on décrit maintenant un premier exemple de déroulement du traitement de messages SIP effectué par la passerelle 1.

Lors du démarrage de la passerelle 1 (et de chaque synchronisation dans le cas d'un accès xDSL), le module de gestion de bande passante 24 détecte la bande passante globale à l'accès (BPGA) de la liaison d'accès 18 et les bandes passantes par interfaces spécialisées. Par exemple, la bande passante globale d'accès est de 200 kbit/s et la bande passante du canal virtuel conversationnel est 160kbit/s.

Sur la figure 2, lors d'une phase 30, l'agent SIP 9 souhaite établir un appel. Il envoie donc un message 31 SIP INVITE, contenant notamment le numéro appelé, le numéro appelant et un champ SDP indiquant les codecs proposés. Dans l'exemple représenté, l'appel souhaité est un appel vocal et les codecs proposés sont G711 20ms ou G729 20ms. Ensuite, lors de l'étape 32, la passerelle SIP 23 compare la bande passante disponible sur le canal virtuel conversationnel avec la bande passante nécessaire aux codecs proposés. A cet effet, la passerelle SIP 23 interroge le module de gestion de la bande passante 24 qui contient par exemple une table indiquant la bande passante nécessaire pour chaque type de codec, tramage, version IP (V4/V6), type d'attachement réseau (DHCP, PPPoE, PPPoA,...) par rapport au type de la liaison d'accès, etc. Dans le cas présent, la passerelle SIP 23 détermine que les deux codecs sont compatibles avec la bande passante disponible. Ainsi, la passerelle SIP 23 relaie le message 31 SIP INVITE en envoyant un message 33 SIP INVITE vers le coeur de réseau IMS 16, sans modifier le champ SDP.

Dans l'exemple représenté, la réponse reçue du coeur de réseau IMS 16 est un message 34 SIP 200 OK dans lequel le champ SDP contient le codec négocié G711 20ms. Le message 34 est reçu par la passerelle SIP 23, ce qui constitue une étape de réception d'un premier message SIP d'une première session SIP au sens de l'invention. Grâce à la réception du message 34, le module de gestion de la bande passante 24 détermine, à l'étape 35, que l'agent SIP 9 va utiliser une bande passante correspondant au codec négocié, de 106 kbit/s sur les 200 kbit/s disponible dans cet exemple. L'étape 35 constitue une étape de détermination de la bande passante utilisée par la première session SIP en fonction d'un premier message SIP, au sens de l'invention. Le message 34 est ensuite relayé vers l'agent SIP 9 et l'appel est établi.

Ensuite, lors d'une phase 40, l'agent SIP 20 souhaite établir un appel alors que l'appel de l'agent SIP 9 est en cours. L'agent SIP 20 envoie donc un message 41 SIP INVITE, contenant notamment le numéro appelé, le numéro appelant et un champ SDP indiquant les codecs proposés. Dans l'exemple représenté, l'appel souhaité est un appel de visiophonie et les codecs proposés sont G722 20 ms, G711 20ms ou G729 20ms et H261 ou H263. La réception du message 41 par la passerelle SIP 23 constitue une étape de réception d'un deuxième message SIP d'une deuxième session SIP, au sens de l'invention.

Ensuite, lors de l'étape 42, la passerelle SIP 23 compare la bande passante disponible sur le canal virtuel Internet avec la bande passante nécessaire aux codecs proposés. Dans le cas présent, comme de la bande passante est utilisée par l'appel de l'agent SIP 9, il ne reste que 94 kbit/s de disponibles. La passerelle SIP 23 détermine donc que la bande passante disponible est insuffisante pour les codecs G722 20 ms, G711 20ms, H261 et H263 et que seul le codec G729 20ms peut être utilisé. L'étape 42 constitue une étape de détermination d'une bande passante autorisée pour la deuxième session SIP en fonction de la bande passante de la liaison d'accès et de la bande passante utilisée par la première session SIP, au sens de l'invention.

Ensuite, la passerelle SIP 23 relaie le message 41 SIP INVITE en envoyant un message 43 SIP INVITE vers le coeur de réseau IMS 16, dans lequel le champ SDP a été modifié en ne conservant que le codec G729 20ms. L'envoi du message 43 constitue une étape d'envoi d'un troisième message SIP déterminé en fonction de la bande passante autorisée pour la deuxième session SIP, au sens de l'invention.

La phase 40 se poursuite par l'établissement d'un appel vocal utilisant uniquement le codec G729 20ms. Lors d'une étape non représentée, le module de gestion de la bande passante 24 détermine la bande passante utilisée par l'agent SIP 20, cette information pouvant être utile ultérieurement.

On constate que le procédé de traitement des messages SIP mis en oeuvre par la passerelle 1 a permis de filtrer les codecs du message 41, afin d'aboutir à l'établissement de deux sessions SIP simultanées utilisant des codecs compatibles avec la bande passante disponible sur la liaison d'accès 18. Ainsi, aucune conversation ne présente une qualité dégradée en raison d'une bande passante insuffisante par rapport au(x) codec(s) négocié(s).

Lors d'une phase 50, l'agent SIP 9 souhaite terminer son appel en cours. Ainsi, il envoie un message 51 SIP BYE. En réponse à la réception du message 51, lors de l'étape 52, le module de gestion de la bande passante 24 détermine que la bande passante utilisée par l'agent SIP 9 est désormais nulle. Lors de l'étape 53, le module de gestion de la bande passante 24 détermine donc que de la bande passante supplémentaire est disponible pour l'agent SIP 20.

Ainsi, lors d'une phase 60, la passerelle SIP 23 envoie un message 31 SIP Re-INVITE sans SDP afin de proposer à l'agent SIP 20 de renégocier les codecs utilisés. L'agent SIP 20 répond par un message 62 SIP 200 OK dans lequel le champ SDP est identique à celui du message 41. En réponse à la réception du message 62, lors de l'étape 63, la passerelle SIP 23 compare la bande passante disponible sur le canal virtuel Internet avec la bande passante nécessaire aux codecs proposés. Dans le cas présent, comme l'agent SIP 9 n'utilise plus de bande passante, la passerelle 23 détermine que la bande passante disponible permet l'utilisation des codecs G722 20ms, G711 20 ms et G729 20ms. La passerelle SIP 23 relaie alors le message 62 en envoyant un message 64 SIP Re-INVITE vers le coeur de réseau IMS 16, dans lequel le champ SDP a été modifié en ne conservant que les codecs G722 20ms, G711 20 ms et G729 20ms. La conversation peut alors se poursuivre et avec le codec négocié G722 20ms, qui offre une qualité supérieure au codec G729 20ms précédemment utilisé.

Au sens de l'invention, la réception du message 51 constitue également une étape de réception d'un premier message SIP de la première session SIP, et l'étape 52 constitue une étape de détermination de la bande passante utilisée par la première session SIP en fonction du premier message SIP. L'étape 53 constitue une étape de détermination d'une bande passante autorisée pour la deuxième session SIP en fonction de la bande passante de la liaison d'accès et de la bande passante utilisée par la première session SIP, et l'envoi du message 61 constitue une étape d'envoi d'un troisième message SIP déterminé en fonction de la bande passante autorisée pour la deuxième session SIP.

On constate que le procédé de traitement des messages SIP mis en oeuvre par la passerelle 1 permet également de détecter la libération de bande passante et de notifier cette information afin d'améliorer la qualité d'un appel en cours, en renégociant les codecs utilisés.

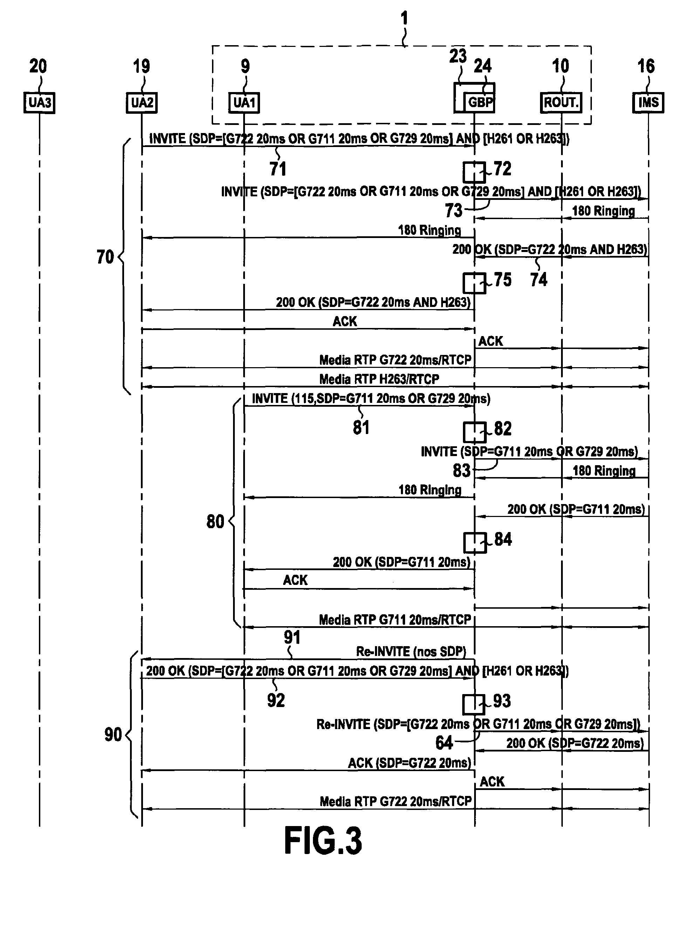

La **figure 3** représente un deuxième exemple de déroulement du traitement de messages SIP effectué par la passerelle 1.

On suppose qu'initialement aucun appel n'est en cours. Ensuite, lors d'une phase 70, l'agent SIP 19 souhaite établir un appel de visiophonie. Il envoie donc un message 71 SIP INVITE, contenant notamment le numéro appelé, le numéro appelant et un champ SDP indiquant les codecs proposés. Dans l'exemple représenté, l'appel souhaité est un appel de visiophonie et les codecs proposés sont G722 20ms ou G711 20ms ou G729 20ms et H261 ou H263. Ensuite, lors de l'étape 72, la passerelle SIP 23 compare la bande passante disponible sur le canal virtuel Internet avec la bande passante nécessaire aux codecs proposés. Dans le cas présent, comme toute la bande passante de la liaison d'accès 18 est disponible, la passerelle SIP 23 détermine que tous les codecs peuvent être utilisés. Ainsi, la passerelle SIP 23 relaie le message 71 SIP INVITE en envoyant un message 73 SIP INVITE vers le coeur de réseau IMS 16, sans modifier le champ SDP.

Dans l'exemple représenté, la réponse reçue du coeur de réseau IMS 16 est un message 74 SIP 200 OK dans lequel le champ SDP contient les codecs négociés G722 20ms et H263. Le message 74 est reçu par la passerelle SIP 23, ce qui constitue une étape de réception d'un premier message SIP d'une première session SIP au sens de l'invention. Grâce à la réception du message 74, le module de gestion de la bande passante 24 détermine, à l'étape 75, que l'agent SIP 19 va utiliser une bande passante correspondant aux codecs négociés, de 180 kbit/s sur les 200 kbit/s disponibles dans cet exemple. L'étape 74 constitue une étape de détermination de la bande passante utilisée par la première session SIP en fonction d'un premier message SIP, au sens de l'invention. Le message 74 est ensuite relayé vers l'agent SIP 19 et l'appel est établi.

Ensuite, lors d'une phase 80, l'agent SIP 9 souhaite établir un appel alors que l'appel de l'agent SIP 19 est en cours. L'agent SIP 9 envoie donc un message 81 SIP INVITE, contenant notamment le numéro appelé, le numéro appelant et un champ SDP indiquant les codecs proposés. Dans l'exemple représenté, l'appel souhaité est un appel d'urgence vers un numéro prioritaire 115 et les codecs proposés sont G711 20ms ou G729 20ms. La réception du message 81 par la passerelle SIP 23 constitue une étape de réception d'un deuxième message SIP d'une deuxième session SIP, au sens de l'invention.

Ensuite, lors de l'étape 82, la passerelle SIP 23 compare la bande passante disponible sur le canal virtuel conversationnel avec la bande passante nécessaire aux codecs proposés. Dans le cas présent, comme de la bande passante est utilisée par l'appel de l'agent SIP 19, il ne reste que 20 kbit/s de disponibles. La passerelle SIP 23 détermine donc que la bande passante disponible est insuffisante pour les codecs proposés. Cependant, comme l'appel provenant de l'agent SIP 9 est prioritaire (numéro d'urgence 115), la passerelle SIP 23 considère que l'agent SIP 19 doit libérer de la bande passante pour l'agent SIP 9, et que de la bande passante est disponible pour l'agent SIP 9. L'étape 82 constitue une étape de détermination d'une bande passante autorisée pour la deuxième session SIP en fonction de la bande passante de la liaison d'accès et de la bande passante utilisée par la première session SIP, au sens de l'invention.

Ensuite, la passerelle SIP 23 relaie le message 81 SIP INVITE en envoyant un message 83 SIP INVITE vers le coeur de réseau IMS 16, sans modifier le champ SDP.

La phase 80 se poursuite par l'établissement d'un appel vocal utilisant le codec négocié G711 20ms. Lors d'une étape 84, le module de gestion de la bande passante 24 détermine la bande passante utilisée par l'agent SIP 9, cette information pouvant être utile ultérieurement.

Par ailleurs, lors d'une phase 90, la passerelle SIP 23 envoie un message 91 SIP Re-INVITE sans SDP afin de proposer à l'agent SIP 19 de renégocier les codecs utilisés. L'envoi du message 91 constitue une étape d'envoi d'un troisième message SIP déterminé en fonction de la bande passante autorisée pour la deuxième session SIP, au sens de l'invention. L'agent SIP 19 répond par un message 92 SIP 200 OK dans lequel le champ SDP est identique à celui du message 71. En réponse à la réception du message 92, lors de l'étape 93, la passerelle SIP 23 compare la bande passante disponible sur le canal virtuel Internet avec la bande passante nécessaire aux codecs proposés. Dans le cas présent, comme l'agent SIP 9 utilise de la bande passante, la passerelle 23 détermine que la bande passante disponible ne permet pas l'utilisation des codecs H261 et H263. La passerelle SIP 23 relaie alors le message 92 en envoyant un message 94 SIP Re-INVITE vers le coeur de réseau IMS 16, dans lequel le champ SDP a été modifié en ne conservant que les codecs G722 20ms, G711 20 ms et G729 20ms. La conversation peut alors se poursuivre avec le codec négocié G722 20ms.

On constate que le procédé de traitement des messages SIP mis en oeuvre par la passerelle 1 a permis de forcer l'agent SIP 19 à renégocier les codecs utilisés, afin de libérer de la bande passante pour un appel considéré prioritaire. Ainsi, le procédé permet d'aboutir à l'établissement de deux sessions SIP simultanées utilisant des codecs compatibles avec la bande passante disponible sur la liaison d'accès 18. Aucune conversation ne présente une qualité dégradée en raison d'une bande passante insuffisante par rapport au(x) codec(s) négocié(s).

Dans le mode de réalisation des figures 1 à 3, la passerelle SIP 23 située dans la passerelle 1 est en coupure des flux de signalisation SIP, ce qui lui permet de filtrer les codecs des champs SDP et de forcer une renégociation des codecs utilisés en envoyant des messages SIP Re-INVITE. On peut noter que, dans un mode de réalisation alternatif, les fonctions de filtrages des champs SDP et d'envoi de messages Re-INVITE pourraient être effectuées par une passerelle SIP située en coupure des flux de signalisation SIP mais dans un autre noeud du réseau 15 que la passerelle 1. Par exemple, ces fonctions peuvent être mise en oeuvre dans un serveur d'application 17, pour autant que le serveur d'application 17 ait connaissance de la bande passante d'accès de la liaison d'accès 18. A cet effet, le serveur d'application 17 peut par exemple obtenir cette information de la part de la passerelle 1, dans un message SIP SUBSCRIBE envoyé par la passerelle 1 après son enregistrement SIP dans le coeur de réseau IMS 16. En variante, le serveur d'application 17 peut obtenir cette information de la part d'un équipement du réseau d'accès, par exemple un multiplexeur DSLAM (« *Digital Subscriber Line Access Multiplexer*»)*.*

Ainsi, un dispositif de traitement de messages SIP conforme à l'invention peut être par exemple une passerelle résidentielle ou un serveur d'application.

On peut noter que dans les modes de réalisation décrit précédemment, le comportement des agents SIP 9, 19 et 20 est conforme au comportement d'un agent SIP classique. Ils ne nécessitent donc aucune configuration particulière.

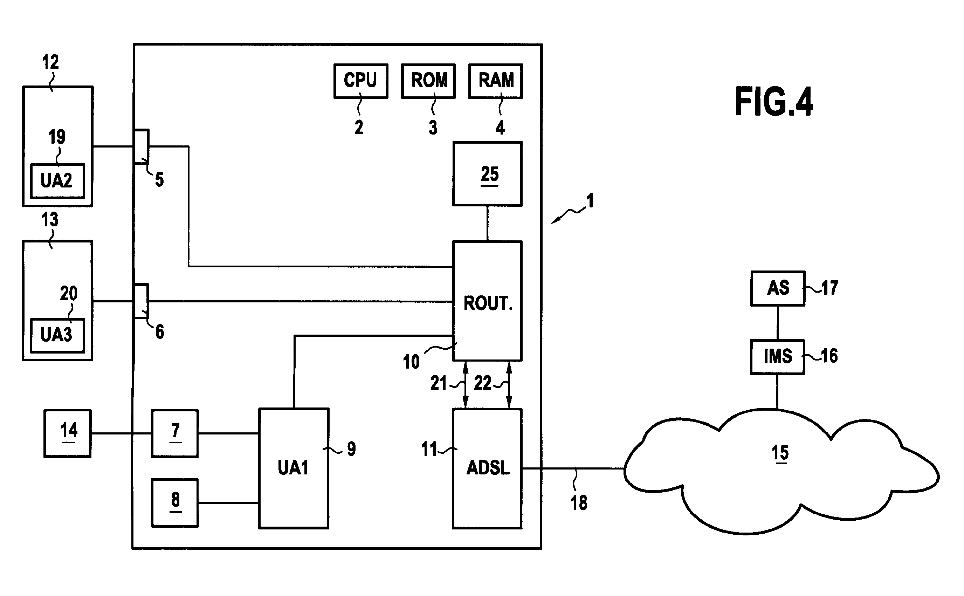

La **figure 4** représente une autre passerelle résidentielle dans son environnement. Les éléments identiques au similaires à des éléments de la passerelle résidentielle de la figure 1 sont désignés par les mêmes références, sans risque de confusion, et ne sont plus décrits en détail.

Dans la passerelle 1 de la figure 4, l'agent SIP 9 est relié au module de routage 10. Les agents SIP 19 et 20 sont également reliés au module de routage 10 par l'intermédiaire des interfaces 5 et 6. La passerelle résidentielle 1 comprend un module de gestion de la bande passante 25 relié au module de routage 10.

Le rôle du module de gestion de la bande passante 25 est notamment de :
- Détecter la bande passante globale à l'accès (BPGA) de la liaison d'accès 18,
- Détecter la bande passante par interface spécialisée (BPIS).
- Estimer en temps réel la bande passante disponible sur l'accès global et/ou par interface spécialisée, par exemple sur la base de messages de signalisation SIP et/ou de l'analyse des trafics récurrents transmis/reçus au niveau des couches basses.
- Communiquer avec les agents SIP 9, 19 et 20 pour les informer de la bande passante qu'ils peuvent utiliser.

Le module de gestion de la bande passante 25 est par exemple réalisé sous la forme d'un « State Agent Notifier » au sens du document RFC 3265 de l'IETF, impliquant la création d'un « Event Package » par exemple appelé « GBA » pouvant être normalisé par l'IETF ou le 3GPP.

Par ailleurs, dans ce mode de réalisation, les agents SIP 9, 19, 20 sont configurés pour pouvoir :
- récupérer l'adresse URI du module de gestion de la bande passante 25 et communiquer avec lui.
- communiquer avec le module de gestion de la bande passante 25 pour l'informer de la bande passante utilisée et obtenir des informations sur la bande passante pouvant être utilisée.
- prendre en compte les messages reçus du module de gestion de la bande passante 25.

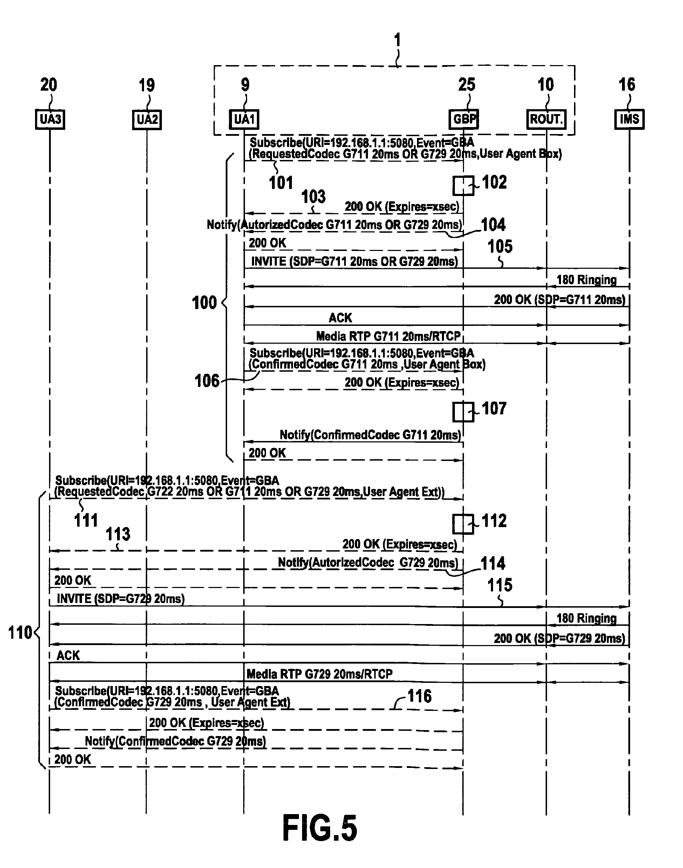

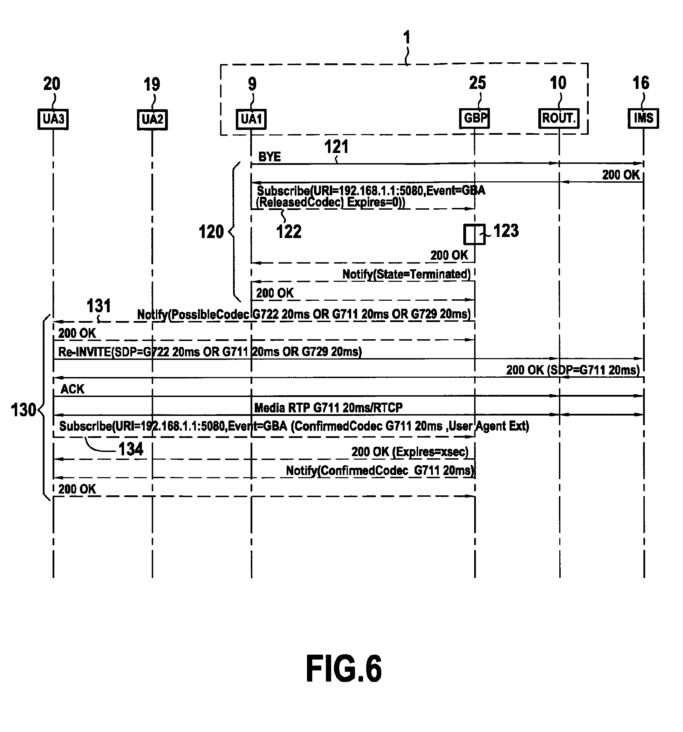

En référence aux **figures 5** **et** **6**, on décrit maintenant un premier exemple de déroulement du traitement de messages SIP effectué par la passerelle 1 de la figure 4.

Lors du démarrage de la passerelle 1 (et de chaque synchronisation dans le cas d'un accès xDSL), le module de gestion de bande passante 25 détecte la bande passante globale à l'accès (BPGA) de la liaison d'accès 18 et les bandes passantes par interfaces spécialisées. Par exemple, la bande passante globale d'accès est de 200 kbit/s et la bande passante du canal virtuel conversationnel est 160kbit/s.

De manière classique, chaque agent SIP 9, 19 et 20 s'enregistre dans le coeur de réseau IMS 16. Par ailleurs, les agents SIP 9, 19 et 20 obtiennent l'adresse URI permettant de communiquer avec le module de gestion de la bande passante 25. Par exemple, l'adresse URI est fournie dans un fichier de configuration (exemple : 192.168.1.1:5080), ou dans une option d'un serveur DHCP de la passerelle 1 destiné à fournir les adresses IP aux terminaux 12 et 13, ou obtenue par un message d'auto-découverte diffusé sur le réseau local de la passerelle 1.

Sur la figure 5, lors d'une phase 100, l'agent SIP 9 souhaite établir un appel vocal. Avant d'envoyer le message 105 SIP INVITE, l'agent SIP 9 souscrit auprès du module de gestion de la bande passante 25 par un message 101 SIP Subscribe. Le message 101 contient notamment un champ « RequestedCodec » propre à l'« Event Package » GBA et contenant les codecs que l'agent SIP 9 souhaite utiliser, et un champ indiquant que le message 101 provient d'un agent SIP interne à la passerelle 1. Dans l'exemple représenté, l'appel souhaité est un appel vocal et les codecs proposés sont G711 20ms ou G729 20ms. Ainsi, lors de l'étape 102, le module de gestion de la bande passante 25 mémorise les codecs compatibles avec l'agent SIP 9 et compare la bande passante disponible avec la bande passante nécessaire aux codecs proposés. Dans le cas présent, comme aucune autre conversation n'est en cours, les deux codecs proposés sont compatibles avec la bande passante disponible. Ainsi, le module de gestion de la bande passante 25 confirme la souscription par un message 103 SIP 200 OK et envoie un message 104 SIP Notify contenant un champ indiquant les codecs autorisés, qui dans ce cas sont identiques aux codecs demandés dans le message 101.

L'agent SIP 9 peut alors envoyer un message 105 SIP INVITE contenant un champ SDP avec les codecs autorisés, et établir la conversation en utilisant le codec négocié, qui est G711 20ms dans l'exemple représenté. Lorsque la conversation est établie, l'agent SIP 9 envoie au module de gestion de la bande passante 25 un message 106 SIP Subscribe contenant un notamment un champ « ConfirmedCodec » propre à l' « Event Package » GBA et indiquant le codec négocié. Ainsi, à l'étape 107, le module de gestion de la bande passante 25 peut déduire du codec négocié la bande passante qui sera utilisée par l'agent SIP 9 et donc déterminer la bande passante qui reste disponible.

Ensuite, lors d'une phase 110, l'agent SIP 20 souhaite établir un appel vocal. Avant d'envoyer le message 115 SIP INVITE, l'agent SIP 20 souscrit auprès du module de gestion de la bande passante 25 par un message 111 SIP Subscribe. Le message 111 contient notamment un champ « RequestedCodec » propre à l' « Event Package » GBA et contenant les codecs que l'agent SIP 20 souhaite utiliser, et un champ indiquant que le message 101 provient d'un agent SIP externe à la passerelle 1. Dans l'exemple représenté, l'appel souhaité est un appel vocal et les codecs proposés sont G722 20ms ou G711 20ms ou G729 20ms. Ainsi, lors de l'étape 112, le module de gestion de la bande passante 25 mémorise les codecs compatibles avec l'agent SIP 20 et compare la bande passante disponible avec la bande passante nécessaire aux codecs proposés. Dans le cas présent, comme de la bande passante est déjà utilisée par l'agent SIP 9, seul le codec G729 20ms est compatible avec la bande passante disponible. Ainsi, le module de gestion de la bande passante 25 confirme la souscription par un message 113 SIP 200 OK et envoie un message 114 SIP Notify contenant un champ indiquant les codecs autorisés, qui dans ce cas contient uniquement le codec G729 20ms.

L'agent SIP 20 peut alors envoyer un message 115 SIP INVITE contenant un champ SDP avec le codec autorisé et établir la conversation. Lorsque la conversation est établie, l'agent SIP 20 envoie au module de gestion de la bande passante 25 un message 116 SIP Subscribe contenant notamment un champ « ConfirmedCodec » propre à l' « Event Package » GBA et indiquant le codec négocié. Ainsi, le module de gestion de la bande passante 25 peut déduire du codec indiqué dans le message 116 la bande passante qui sera utilisée par l'agent SIP 20 et donc déterminer la bande passante qui reste disponible.

Sur la figure 5, la réception du message 106 constitue une étape de réception d'un premier message SIP et l'étape 107 constitue une étape de détermination de la bande passante utilisée par la première session SIP, au sens de l'invention. La réception du message 111 constitue une étape de réception d'un deuxième message SIP et l'étape 112 constitue une étape de détermination de la bande passante autorisée pour la deuxième session SIP, au sens de l'invention. Enfin, l'envoi du message 114 constitue une étape d'envoi d'un troisième message SIP déterminé en fonction de la bande passante autorisée pour la deuxième session SIP.

On constate que le procédé de traitement des messages SIP mis en oeuvre par la passerelle 1 de la figure 4 a permis de sélectionner, parmi les codecs du message 111, celui qui était compatible avec la bande passante disponible. Cela a permis d'aboutir à l'établissement de deux sessions SIP simultanées utilisant des codecs compatibles avec la bande passante disponible sur la liaison d'accès 18. Ainsi, aucune conversation ne présente une qualité dégradée en raison d'une bande passante insuffisante par rapport au(x) codec(s) négocié(s).

En référence à la figure 6, on suppose maintenant que, pendant que l'appel de l'agent SIP 20 est en cours, l'agent SIP 9 décide de libérer son appel. Lors d'une phase 120, l'agent SIP 9 envoie un message 121 SIP BYE vers le coeur de réseau IMS 16. Par ailleurs, l'agent SIP 9 informe le module de gestion de la bande passante 25 de la libération de l'appel en lui envoyant un message 122 SIP Subscribe, contenant un champ « ReleasedCodec ». En réponse à la réception du message 122, le module de gestion de la bande passante 25 détermine, lors d'une étape 123, que la bande passante utilisée par l'agent SIP 9 est désormais nulle et donc que de la bande passante supplémentaire est disponible pour l'agent SIP 20.

Ainsi, lors d'une phase 130, le module de gestion de la bande passante 25 envoie un message 131 SIP Notify contenant un champ « PossibleCodec », contenant les codecs pris en charge par l'agent SIP 20 (mémorisé à l'étape 112) qui sont compatibles avec la bande passante disponible déterminée à l'étape 123. En réponse à la réception du message 131, l'agent SIP 20 envoie un message 132 SIP Re-INVITE contenant un champ SDP indiquant les codecs proposés. Dans l'exemple représenté, le codec négocié par la suite de la session SIP est G711 20 ms. Ainsi, la conversation peut se poursuivre et avec le codec négocié G711 20ms, qui offre une qualité supérieure au codec G729 20ms précédemment utilisé.

Sur la figure 6, la réception du message 122 constitue une étape de réception d'un premier message SIP et l'étape 123 constitue une étape de détermination de la bande passante utilisée par la première session SIP et une étape de détermination de la bande passante autorisée pour la deuxième session SIP, au sens de l'invention. L'envoi du message 131 constitue une étape d'envoi d'un troisième message SIP déterminé en fonction de la bande passante autorisée pour la deuxième session SIP.

On constate que le procédé de traitement des messages SIP mis en oeuvre par la passerelle 1 de la figure 4 a également permis de proposer à l'agent SIP 20 de renégocier les codecs utilisés, afin d'utiliser de la bande passante disponible supplémentaire et d'améliorer la qualité d'une conversation en cours.

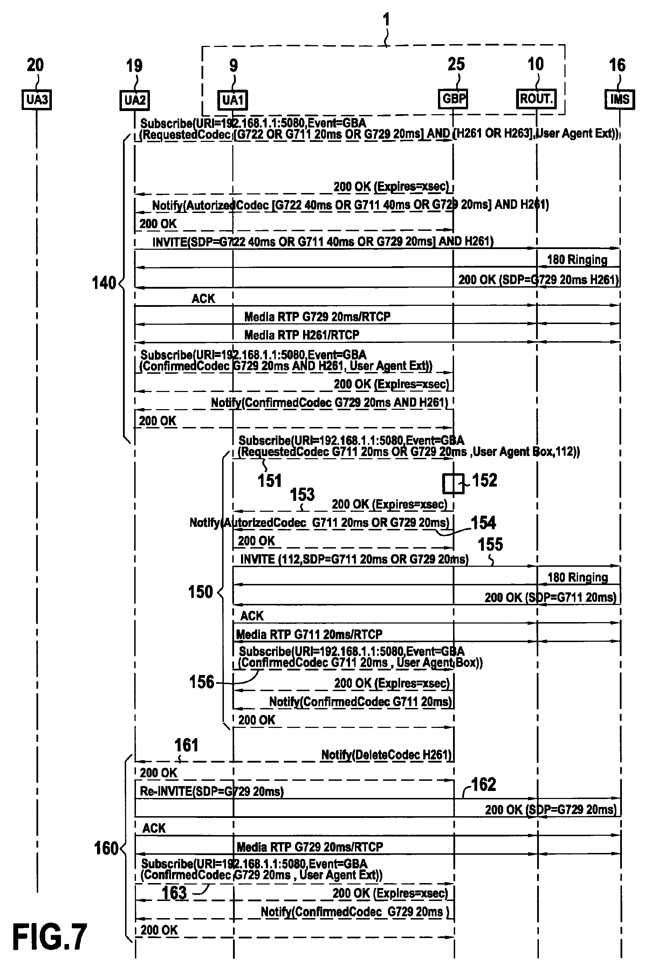

En référence à la **figure 7**, on décrit maintenant un deuxième exemple de déroulement du traitement de messages SIP effectué par la passerelle 1 de la figure 4.

Lors d'une phase 140, l'agent SIP 19 établit un appel de visiophonie. La phase 140 est similaire à la phase 100 décrite précédemment et n'est donc pas décrite en détail. A l'issue de la phase 140, le module de gestion de la bande passante 25 a connaissance de la bande passante utilisée par l'agent SIP 19 et des codecs pris en charge.

Ensuite, lors d'une phase 150, l'agent SIP 9 souhaite établir un appel vocal vers un numéro d'urgence (n° 112 dans l'exemple représenté). Avant d'envoyer le message 155 SIP INVITE, l'agent SIP 9 souscrit auprès du module de gestion de la bande passante 25 par un message 151 SIP Subscribe qui contient notamment un champ « RequestedCodec » indiquant les codecs que l'agent SIP 9 souhaite utiliser. Dans l'exemple représenté, l'appel souhaité est un appel vocal et les codecs proposés sont G711 20ms ou G729 20ms. Ainsi, lors de l'étape 152, le module de gestion de la bande passante 25 mémorise les codecs compatibles avec l'agent SIP 9 et compare la bande passante disponible avec la bande passante nécessaire aux codecs proposés. Dans le cas présent, comme de la bande passante est déjà utilisée par l'agent SIP 19, aucun codec n'est compatible avec la bande passante disponible. Cependant, comme l'appel de l'agent SIP est considéré prioritaire (appel vers un numéro d'urgence), le module de gestion de la bande passante 25 considère que l'agent SIP 19 doit libérer de la bande passante et que de la bande passante est disponible pour l'agent SIP 9. Ainsi, le module de gestion de la bande passante 25 confirme la souscription par un message 153 SIP 200 OK et envoie un message 154 SIP Notify contenant un champ indiquant les codecs autorisés, qui dans ce cas sont identiques aux codecs demandés dans le message 151.

L'agent SIP 9 peut alors envoyer un message 155 SIP INVITE contenant un champ SDP avec les codecs autorisés et établir la conversation. Lorsque la conversation est établie, l'agent SIP 9 envoie au module de gestion de la bande passante 25 un message 156 SIP Subscribe contenant un notamment un champ « ConfirmedCodec » indiquant le codec négocié. Ainsi, le module de gestion de la bande passante 25 peut déduire la bande passante qui sera utilisée par l'agent SIP 9.

Par ailleurs, lors d'une phase 160, le module de gestion de la bande passante 25 demande à l'agent SIP 19 de libérer de la bande passante pour l'agent SIP 9. A cet effet, le module de gestion de la bande passante 25 envoie un message 161 SIP Notify contenant un champ « DeleteCodec » indiquant le ou les codecs que l'agent SIP 19 ne peut plus utiliser. En réponse à la réception du message 161, l'agent SIP 19 envoie un message 162 SIP Re-INVITE pour renégocier la session SIP et ainsi libérer de la bande passante, puis informe le module de gestion de la bande passante du codec utilisé par un message 163 SIP Subscribe.

La figure 7 représente un exemple dans lequel de la bande passante est libérée pour un appel considéré prioritaire parce que le numéro de destination est un numéro d'urgence. Un appel peut également être considéré prioritaire parce qu'il provient de l'agent SIP 9 interne. Le module de gestion de la bande passante 25 peut déterminer qu'un message SIP Subscribe provient d'un agent SIP interne ou externe grâce au champ correspondant précité (Valeurs « User Agent Ext » ou « User Agent Box » sur les figures 5 à 7).

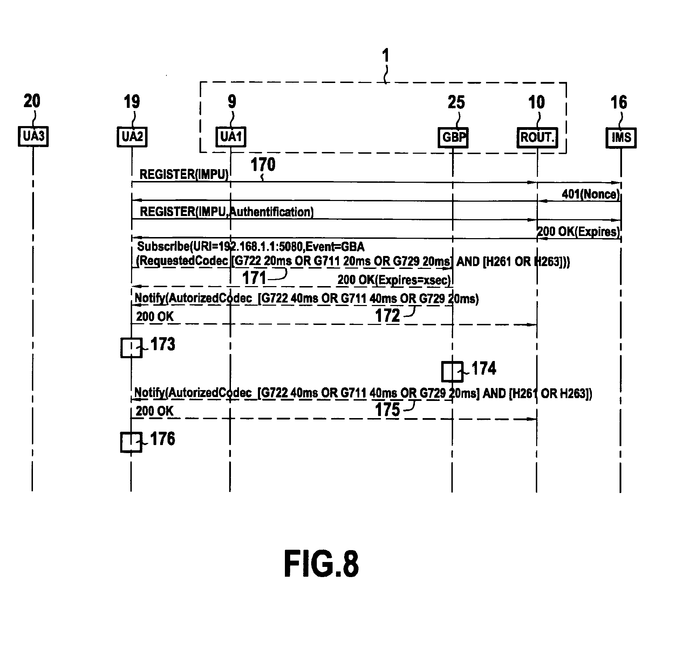

Dans les exemples des figures 5 à 7, les agents SIP 9, 19, 20 souscrivent auprès du module de gestion de la bande passante 25 lorsqu'ils souhaitent passer un appel, avant d'envoyer un message SIP INVITE. Dans la variante représentée sur la **figure 8**, les agents SIP souscrivent auprès du module de gestion de la bande passante 25 lors de leur démarrage, après enregistrement dans le coeur de réseau IMS 16. Cela permet un gain de temps puisque dans ce cas, le contexte du dialogue SIP Subscribe est déjà crée au niveau des agents SIP et du module de gestion de la bande passante 25. Par ailleurs, cela permet également aux agents SIP, grâce à la réception d'un message SIP Notify, de connaître les codecs autorisés et d'adapter leur interface homme machine (IHM) de manière correspondante. Par exemple, lorsque la bande passante disponible permet une conversation vocale mais pas un appel visiophonique, un bouton de déclenchement de la vidéo peut être grisé.

Dans l'exemple de la figure 8, l'agent SIP 19 est démarré à l'étape 170 puis, après s'être enregistré dans le coeur de réseau IMS 16, il envoie au module de gestion de la bande passante 25 un message 171 SIP Subscribe 171, même s'il n'a pas d'appel à émettre à cet instant. Le module de gestion de la bande passante 25 répond par un message 172 SIP Notify indiquant les codecs autorisés compte tenu de la bande passante disponible (les agents SIP 20 et 9 pouvant avoir des appels en cours). Dans l'exemple représenté, la bande passante est insuffisante pour un appel de visiophonie et lors de l'étape 173, l'agent SIP 19 adapte l'IHM du terminal 12 en grisant un bouton de déclenchement de la vidéo. Si, lors d'une étape 174, de la bande passante est libérée par l'agent SIP 9 ou 20, rendant l'utilisation de la vidéo possible, le module de gestion de la bande passante 25 envoie un message 175 à l'agent SIP 19 pour l'informer, et l'agent SIP 19 adapte l'IHM du terminal 12 en dégrisant le bouton de déclenchement de la vidéo.

L'adaptation de l'IHM peut également être mise en oeuvre dans le cadre d'une variante du premier mode de réalisation décrit en référence aux figures 1 à 3. Dans cette variante, les agents SIP peuvent souscrire auprès du module de gestion de la bande passante 24 pour être informé des codecs autorisés, de manière similaire à ce qui a été décrit en référence à la figure 8.

L'invention a été décrite en référence à une liaison d'accès utilisant la technologie ADSL. Bien entendu, l'invention est applicable à d'autre type de liaisons d'accès, par exemple une liaison par fibre optique ou par câble ou sans fil de type mobile 3G, 3G+, LTE, ...

L'invention a été décrite en référence à une passerelle résidentielle contenant un unique agent SIP 9 interne. En variante, l'invention peut être appliquée à une passerelle résidentielle présentant deux agents SIP internes, par exemple grâce à la technique décrite dans le document FR 2 909 820 cité en introduction.

Dans l'exemple de réalisation de l'invention exposé ci-dessus et illustré par les dessins annexés, le procédé de traitement conforme à l'invention est appliqué à des appels sortants, c'est-à-dire des appels émis par un terminal SIP relié localement à une passerelle résidentielle vers le coeur de réseau IMS. Cependant un procédé selon l'invention est applicable bien entendu à des appels entrants, c'est-à-dire des appels provenant du coeur de réseau IMS à destination d'un terminal SIP relié localement à une passerelle résidentielle.

## Revendications

1. Procédé de traitement de messages SIP exécuté par un noeud (1 ; 17) d'un réseau de télécommunication, ledit réseau (15) comprenant une passerelle (1) résidentielle reliée à un coeur de réseau IMS (16) par une liaison d'accès (18), au moins un premier terminal SIP (12, 19 ; 13, 20 ; 14, 9) et un deuxième terminal SIP (12, 19 ; 13, 20 ; 14, 9) reliés localement à ladite passerelle (1) résidentielle, ledit premier terminal SIP étant apte à établir une première session SIP vers le coeur de réseau IMS en passant par ladite liaison d'accès, ledit deuxième terminal SIP étant apte à établir une deuxième session SIP vers le coeur de réseau IMS en passant par ladite liaison d'accès, ledit procédé de traitement comprenant une étape d'obtention d'une bande passante de ladite liaison d'accès,
ledit procédé de traitement étant **caractérisé en ce qu'**il comprend :
- une étape de réception d'un premier message SIP (34, 51, 106, 121) concernant la première session SIP,
- une étape (35, 52, 107, 123) de détermination de la bande passante utilisée par ladite première session SIP en fonction dudit premier message SIP,
- une étape de réception d'un deuxième message SIP (41, 81, 111, 151) concernant la deuxième session SIP,
- une étape (42, 112) de détermination d'une bande passante autorisée pour ladite deuxième session SIP en fonction du deuxième message SIP, de la bande passante de la liaison d'accès et de la bande passante utilisée par la première session SIP, et
- une étape d'envoi d'un troisième message SIP (43, 61, 91, 114, 131, 161) vers ledit premier terminal, ledit deuxième terminal ou ledit coeur de réseau IMS, ledit troisième message étant déterminé au moins en fonction de ladite bande passante autorisée pour ladite deuxième session SIP, ledit troisième message SIP étant destiné à influencer une sélection de la bande passante pour la première session SIP ou la deuxième session SIP.

2. Procédé de traitement selon la revendication 1, dans lequel ledit deuxième message SIP est un message (41) SIP INVITE émis par le deuxième terminal SIP (20) et contenant un champ SDP indiquant les codecs souhaités par le deuxième terminal SIP, ladite étape (42) de détermination d'une bande passante autorisée pour ladite deuxième session SIP comprenant la sélection d'au moins un codec autorisé parmi lesdits codecs souhaités, ledit troisième message SIP étant un message (43) SIP INVITE émis vers le coeur de réseau IMS et contenant un champ SDP indiquant ledit au moins un codec autorisé.

3. Procédé de traitement selon la revendication 2, dans lequel ledit premier message SIP est un message (34) SIP OK contenant un champ SDP indiquant le ou les codecs utilisés pour la première session SIP, la bande passante utilisée par la première session SIP étant déterminée en fonction du ou desdits codecs utilisés.

4. Procédé de traitement selon la revendication 1, dans lequel, en réponse à la détermination d'une bande passante utilisée par la première session SIP plus faible qu'une bande passante précédemment utilisée par la première session SIP, le troisième message SIP est un message (61) SIP Re-INVITE envoyé vers le deuxième terminal SIP (20) et ne contenant pas de champ SDP.

5. Procédé de traitement selon la revendication 4, dans lequel ledit premier message SIP est un message SIP BYE (51) reçu du premier terminal SIP (9).

6. Procédé de traitement selon la revendication 1, dans lequel, lorsque le deuxième message SIP (81) contient une information indiquant que la deuxième session SIP est plus prioritaire que la première session SIP, le troisième message SIP est un message (91) SIP Re-INVITE envoyé vers le premier terminal SIP (20) et ne contenant pas de champ SDP.

7. Procédé de traitement selon la revendication 1, dans lequel ledit deuxième message SIP est un message (111) SIP Subscribe émis par le deuxième terminal SIP (20) et contenant un champ SDP indiquant les codecs souhaités par le deuxième terminal SIP, ladite étape (112) de détermination d'une bande passante autorisée pour ladite deuxième session SIP comprenant la sélection d'au moins un codec autorisé parmi lesdits codecs souhaités, ledit troisième message SIP étant un message (114) SIP Notify émis vers ledit deuxième terminal SIP et contenant un champ SDP indiquant ledit au moins un codec autorisé.

8. Procédé de traitement selon la revendication 7, dans lequel ledit premier message SIP est un message (106) SIP Subscribe contenant un champ SDP indiquant le ou les codecs utilisés pour la première session SIP, la bande passante utilisée par la première session SIP étant déterminée en fonction du ou desdits codecs utilisés.

9. Procédé de traitement selon la revendication 1, dans lequel, en réponse à la détermination d'une bande passante utilisée par la première session SIP plus faible qu'une bande passante précédemment utilisée par la première session SIP, le troisième message SIP est un message (131) SIP Notify envoyé vers le deuxième terminal SIP (20) et contenant un champ indiquant des codecs autorisé pour la deuxième session SIP.

10. Procédé de traitement selon la revendication 9, dans lequel ledit premier message SIP est un message (122) SIP Subscribe contenant un champ indiquant qu'au moins un codec précédemment utilisé par la première session SIP n'est plus utilisé.

11. Procédé de traitement selon la revendication 1, dans lequel, lorsque le deuxième message SIP (151) contient une information indiquant que la deuxième session SIP est plus prioritaire que la première session SIP, le troisième message SIP est un message (161) SIP Notify envoyé vers le premier terminal SIP (19) et contenant un champ indiquant au moins un codec qui n'est plus autorisé pour la première session SIP.

12. Procédé de traitement selon la revendication 1, comprenant une étape d'envoi d'un message (172, 175) SIP Notify contenant au moins un codec autorisé vers ledit premier ou deuxième terminal SIP, ledit premier ou deuxième terminal SIP étant apte à adapter une interface homme-machine en fonction dudit au moins un codec autorisé.

13. Programme d'ordinateur comportant des instructions pour l'exécution des étapes du procédé de traitement selon l'une quelconque des revendications 1 à 12, lorsque ledit programme est exécuté par un ordinateur.

14. Support d'informations lisible par un ordinateur et comportant des instructions d'un programme d'ordinateur selon la revendication13.

15. Dispositif de traitement (1 ; 17) de messages SIP destiné à un réseau (15) de télécommunication comprenant une passerelle (1) résidentielle reliée à un coeur de réseau IMS (16) par une liaison d'accès (18), au moins un premier terminal SIP (12, 19 ; 13, 20 ; 14, 9) et un deuxième terminal SIP (12, 19 ; 13, 20 ; 14, 9) reliés localement à ladite passerelle (1) résidentielle, ledit premier terminal SIP étant apte à établir une première session SIP vers le coeur de réseau IMS en passant par ladite liaison d'accès, ledit deuxième terminal SIP étant apte à établir une deuxième session SIP vers le coeur de réseau IMS en passant par ladite liaison d'accès, ledit dispositif de traitement comprenant des moyens d'obtention d'une bande passante de ladite liaison d'accès,
ledit dispositif de traitement étant **caractérisé en ce qu'**il comprend :
- des moyens (23, 24 ; 25) de réception d'un premier message SIP (34, 51, 106, 112) concernant la première session SIP,
- des moyens (23, 24 ; 25) de détermination de la bande passante utilisée par ladite première session SIP en fonction dudit premier message SIP,
- des moyens (23, 24 ; 25) de réception d'un deuxième message SIP (41, 81, 111, 151) concernant la deuxième session SIP,
- des moyens (23, 24 ; 25) de détermination d'une bande passante autorisée pour ladite deuxième session SIP en fonction de la bande passante de la liaison d'accès et de la bande passante utilisée par la première session SIP, et
- des moyens (23, 24 ; 25) d'envoi d'un troisième message SIP (43, 61, 91, 114, 131, 161) vers ledit premier terminal, ledit deuxième terminal ou ledit coeur de réseau IMS, ledit troisième message étant déterminé au moins en fonction de ladite bande passante autorisée pour ladite deuxième session SIP, ledit troisième message SIP étant destiné à influencer une sélection de la bande passante pour la première session SIP ou la deuxième session SIP.

16. Passerelle résidentielle comprenant un dispositif de traitement selon la revendication 15.

## Patentansprüche

1. Verfahren zur Verarbeitung von SIP-Nachrichten, das von einem Knoten (1; 17) eines Telekommunikationsnetzes ausgeführt wird, wobei das Netz (15) ein Kabelmodem (1), das mit einem Kernnetz IMS (16) durch eine Zugangsverbindung (18) verbunden ist, mindestens ein erstes SIP-Terminal (12, 19; 13, 20; 14, 9) und ein zweites SIP-Terminal (12, 19; 13, 20; 14, 9) umfasst, die lokal mit dem Kabelmodem (1) verbunden sind, wobei das erste SIP-Terminal geeignet ist, eine erste SIP-Sitzung zu dem Kernnetz IMS über die Zugangsverbindung herzustellen, wobei das zweite SIP-Terminal geeignet ist, eine zweite SIP-Sitzung zu dem Kernnetz IMS über die Zugangsverbindung herzustellen, wobei das Verarbeitungsverfahren einen Schritt des Erhalts einer Bandbreite der Zugangsverbindung umfasst,
wobei das Verarbeitungsverfahren **dadurch gekennzeichnet ist, dass** es umfasst:
- einen Schritt des Empfangs einer ersten SIP-Nachricht (34, 51, 106, 121) betreffend die erste SIP-Sitzung,
- einen Schritt (35, 52, 107, 123) der Bestimmung der verwendeten Bandbreite für die erste SIP-Sitzung in Abhängigkeit von der ersten SIP-Nachricht,
- einen Schritt des Empfangs einer zweiten SIP-Nachricht (41, 81, 111, 151) betreffend die zweite SIP-Sitzung,
- einen Schritt (42, 112) der Bestimmung einer gestatteten Bandbreite für die zweite SIP-Sitzung in Abhängigkeit von der zweiten SIP-Nachricht, der Bandbreite der Zugangsverbindung und der von der ersten SIP-Sitzung verwendeten Bandbreite, und
- einen Schritt des Sendens einer dritten SIP-Nachricht (43, 61, 91, 114, 131, 161) zu dem ersten Terminal, dem zweiten Terminal oder Kernnetz IMS, wobei die dritte Nachricht zumindest in Abhängigkeit von der gestatteten Bandbreite für die zweite SIP-Sitzung bestimmt wird, wobei die dritte SIP-Nachricht dazu bestimmt ist, eine Auswahl der Bandbreite für die erste SIP-Sitzung oder die zweite SIP-Sitzung zu beeinflussen.

2. Verarbeitungsverfahren nach Anspruch 1, bei dem die zweite SIP-Nachricht eine Nachricht (41) SIP INVITE ist, die von dem zweiten SIP-Terminal (20) entsandt wird und ein SDP-Feld enthält, das die von dem zweiten SIP-Terminal gewünschten Codecs angibt, wobei der Schritt (42) der Bestimmung einer gestatteten Bandbreite für die zweite SIP-Sitzung die Auswahl mindestens eines gestatteten Codec unter den gewünschten Codecs umfasst, wobei die dritte SIP-Nachricht eine Nachricht (43) SIP INVITE ist, die zum Kernnetz IMS gesandt wird und ein SDP-Feld enthält, das den mindestens einen gestatteten Codec angibt.

3. Verarbeitungsverfahren nach Anspruch 2, bei dem die erste SIP-Nachricht eine Nachricht (34) SIP OK ist die ein SDP-Feld enthält, das den oder die Codecs angibt, die für die erste SIP-Sitzung verwendet werden, wobei die von der ersten SIP-Sitzung verwendete Bandbreite in Abhängigkeit von dem oder den verwendeten Codecs bestimmt wird.

4. Verarbeitungsverfahren nach Anspruch 1, bei dem als Antwort auf die Bestimmung einer von der ersten SIP-Sitzung Bandbreite, die geringer als eine vorher von der ersten SIP-Sitzung verwendete Bandbreite ist, die dritte SIP-Nachricht eine Nachricht (61) SIP Re-INVITE ist, die zu dem zweiten SIP-Terminal (20) gesandt wird und kein SDP-Feld enthält.

5. Verarbeitungsverfahren nach Anspruch 4, bei dem die erste SIP-Nachricht eine Nachricht SIP BYE (51) ist, die von dem ersten SIP-Terminal (9) empfangen wird.

6. Verarbeitungsverfahren nach Anspruch 1, bei dem, wenn die zweite SIP-Nachricht (81) eine Information enthält, die anzeigt, dass die zweite SIP-Sitzung prioritärer als die erste SIP-Sitzung ist, die dritte SIP-Nachricht eine Nachricht (91) SIP Re-INVITE ist, die zum ersten SIP-Terminal gesandt wird und kein SDP-Feld (20) enthält.

7. Verarbeitungsverfahren nach Anspruch 1, bei dem die zweite SIP-Nachricht eine Nachricht (111) SIP Subscribe ist, die von dem zweiten SIP-Terminal (20) entsandt wird und ein SDP-Feld enthält, das die von dem zweiten SIP-Terminal gewünschten Codecs angibt, wobei der Schritt (112) der Bestimmung einer gestatteten Bandbreite für die zweite SIP-Sitzung die Auswahl mindestens eines gestatteten Codec unter den gewünschten Codecs umfasst, wobei die dritte SIP-Nachricht eine Nachricht (114) SIP Notify ist, die zu dem zweiten SIP-Terminal entsandt wird und ein SDP-Feld enthält, das den mindestens einen gestatteten Codec anzeigt.

8. Verarbeitungsverfahren nach Anspruch 7, bei dem die erste SIP-Nachricht eine Nachricht (106) SIP Subscribe ist, die ein SDP-Feld enthält, das den oder die Codecs angibt, die für die erste SIP-Sitzung verwendet werden, wobei die von der ersten SIP-Sitzung verwendete Bandbreite in Abhängigkeit von dem oder den verwendeten Codecs bestimmt wird.

9. Verarbeitungsverfahren nach Anspruch 1, bei dem als Antwort auf die Bestimmung einer von der ersten SIP-Sitzung verwendeten Bandbreite, die geringer als eine vorher von der ersten SIP-Sitzung verwendete Bandbreite ist, die dritte SIP-Nachricht eine Nachricht (131) SIP Notify ist, die zu dem zweiten SIP-Terminal (20) gesandt wird und ein Feld enthält, das die für die zweite SIP-Sitzung gestatteten Codecs angibt.

10. Verarbeitungsverfahren nach Anspruch 9, bei dem die erste SIP-Nachricht eine Nachricht (122) SIP Subscribe ist, die ein Feld enthält, das anzeigt, dass mindestens ein vorher von der ersten SIP-Sitzung verwendeter Codec nicht mehr verwendet wird.

11. Verarbeitungsverfahren nach Anspruch 1, bei dem, wenn die zweite SIP-Nachricht (151) eine Information enthält, die anzeigt, dass die zweite SIP-Sitzung prioritärer als die erste SIP-Sitzung ist, die dritte SIP-Nachricht eine Nachricht (161) SIP Notify ist, die zu dem ersten SIP-Terminal (19) gesandt wird und ein Feld enthält, das mindestens einen Codec angibt, der für die erste SIP-Sitzung nicht mehr gestattet ist.

12. Verarbeitungsverfahren nach Anspruch 1, umfassend einen Schritt des Sendens einer Nachricht (172, 175) SIP Notify, die mindestens einen gestatteten Codec zu dem ersten oder zweiten SIP-Terminal enthält, wobei das erste oder zweite SIP-Terminal geeignet ist, eine Mensch-Maschine-Schnittstelle in Abhängigkeit von dem mindestens einen gestatteten Codec anzupassen.

13. Computerprogramm, umfassend Befehle für die Ausführung der Schritte des Verarbeitungsverfahrens nach einem der Ansprüche 1 bis 12, wenn das Programm von einem Computer ausgeführt wird.

14. Von einem Computer lesbarer Informationsträger, umfassend Befehle eines Computerprogramms nach Anspruch 13.

15. Vorrichtung zur Verarbeitung (1; 17) von SIP-Nachrichten, die für ein Telekommunikationsnetz (15) bestimmt sind, umfassend ein Kabelmodem (1), das mit einem Kernnetz IMS (16) durch eine Zugangsverbindung (18) verbunden ist, mindestens ein erstes SIP-Terminal (12, 19; 13, 20; 14, 9) und ein zweites SIP-Terminal (12, 19; 13, 20; 14, 9), die lokal mit dem Kabelmodem (1) verbunden sind, wobei das erste SIP-Terminal geeignet ist, eine erste SIP-Sitzung zum dem Kernnetz IMS über die Zugangsverbindung herzustellen, wobei das zweite SIP-Terminal geeignet ist, eine zweite SIP-Sitzung zu dem Kernnetz IMS über die Zugangsverbindung herzustellen, wobei die Verarbeitungsvorrichtung Mittel für den Erhalt einer Bandbreite der Zugangsverbindung umfasst,
wobei die Verarbeitungsvorrichtung **dadurch gekennzeichnet ist, dass** sie umfasst:
- Mittel (23, 24; 25) für den Empfang einer ersten SIP-Nachricht (34, 51, 106, 112) betreffend die erste SIP-Sitzung,
- Mittel (23, 24; 25) zur Bestimmung der verwendeten Bandbreite für die erste SIP-Sitzung in Abhängigkeit von der ersten SIP-Nachricht,
- Mittel (23, 24; 25) für den Empfang einer zweiten SIP-Nachricht (41, 81, 111, 151) betreffend die zweite SIP-Sitzung,
- Mittel (23, 24; 25) zur Bestimmung einer gestatteten Bandbreite für die zweite SIP-Sitzung in Abhängigkeit von der Bandbreite der Zugangsverbindung und der von der ersten SIP-Sitzung verwendeten Bandbreite, und
- Mittel (23, 24; 25) zum Senden einer dritten SIP-Nachricht (43, 61, 91, 114, 131, 161) zu dem ersten Terminal, dem zweiten Terminal oder Kernnetz IMS, wobei die dritte Nachricht zumindest in Abhängigkeit von der gestatteten Bandbreite für die zweite SIP-Sitzung bestimmt wird, wobei die dritte SIP-Nachricht dazu bestimmt ist, eine Auswahl der Bandbreite für die erste SIP-Sitzung oder die zweite SIP-Sitzung zu beeinflussen.

16. Kabelmodem, umfassend eine Verarbeitungsvorrichtung nach Anspruch 15.

## Claims

1. Method for processing SIP messages, executed by a node (1; 17) of a telecommunication network, said network (15) comprising a residential gateway (1) linked to an IMS network core (16) by an access link (18), at least one first SIP terminal (12, 19; 13, 20; 14, 9) and a second SIP terminal (12, 19; 13, 20; 14, 9) which are linked locally to said residential gateway (1), said first SIP terminal being able to establish a first SIP session to the IMS network core by passing through said access link, said second SIP terminal being able to establish a second SIP session to the IMS network core by passing through said access link, said processing method comprising a step of obtaining a bandwidth of said access link,
said processing method being **characterized in that** it comprises:
- a step of receiving a first SIP message (34, 51, 106, 121) relating to the first SIP session,
- a step (35, 52, 107, 123) of determining the bandwidth used by said first SIP session as a function of said first SIP message,
- a step of receiving a second SIP message (41, 81, 111, 151) relating to the second SIP session,
- a step (42, 112) of determining an authorized bandwidth for said second SIP session as a function of the second SIP message, the bandwidth of the access link and the bandwidth used by the first SIP session, and
- a step of dispatching a third SIP message (43, 61, 91, 114, 131, 161) to said first terminal, said second terminal or said IMS network core, said third message being determined at least as a function of said authorized bandwidth for said second SIP session, said third SIP message being intended to influence a selection of the bandwidth for the first SIP session or the second SIP session.

2. Processing method according to Claim 1, in which said second SIP message is an INVITE SIP message (41) emitted by the second SIP terminal (20) and containing an SDP field indicating the codecs desired by the second SIP terminal, said step (42) of determining an authorized bandwidth for said second SIP session comprising the selection of at least one authorized codec from among said desired codecs, said third SIP message being an INVITE SIP message (43) emitted to the IMS network core and containing an SDP field indicating said at least one authorized codec.

3. Processing method according to Claim 2, in which said first SIP message is an OK SIP message (34) containing an SDP field indicating the codec or codecs used for the first SIP session, the bandwidth used by the first SIP session being determined as a function of the or of said codecs used.

4. Processing method according to Claim 1, in which, in response to the determination of a bandwidth used by the first SIP session which is lower than a bandwidth previously used by the first SIP session, the third SIP message is a Re-INVITE SIP message (61) dispatched to the second SIP terminal (20) and not containing any SDP field.

5. Processing method according to Claim 4, in which said first SIP message is an BYE SIP message (51) received from the first SIP terminal (9).

6. Processing method according to Claim 1, in which, when the second SIP message (81) contains an item of information indicating that the second SIP session is of higher priority than the first SIP session, the third SIP message is a Re-INVITE SIP message (91) dispatched to the first SIP terminal (20) and not containing any SDP field.

7. Processing method according to Claim 1, in which said second SIP message is a Subscribe SIP message (111) emitted by the second SIP terminal (20) and containing an SDP field indicating the codecs desired by the second SIP terminal, said step (112) of determining an authorized bandwidth for said second SIP session comprising the selection of at least one authorized codec from among said desired codecs, said third SIP message being a Notify SIP message (114) emitted to said second SIP terminal and containing an SDP field indicating said at least one authorized codec.

8. Processing method according to Claim 7, in which said first SIP message is a Subscribe SIP message (106) containing an SDP field indicating the codec or codecs used for the first SIP session, the bandwidth used by the first SIP session being determined as a function of the or of said codecs used.

9. Processing method according to Claim 1, in which, in response to the determination of a bandwidth used by the first SIP session which is lower than a bandwidth previously used by the first SIP session, the third SIP message is a Notify SIP message (131) dispatched to the second SIP terminal (20) and containing a field indicating codecs authorized for the second SIP session.

10. Processing method according to Claim 9, in which said first SIP message is a Subscribe SIP message (122) containing a field indicating that at least one codec previously used by the first SIP session is no longer used.

11. Processing method according to Claim 1, in which, when the second SIP message (151) contains an item of information indicating that the second SIP session is of higher priority than the first SIP session, the third SIP message is a Notify SIP message (161) dispatched to the first SIP terminal (19) and containing a field indicating at least one codec which is no longer authorized for the first SIP session.

12. Processing method according to Claim 1, comprising a step of dispatching a Notify SIP message (172, 175) containing at least one authorized codec to said first or second SIP terminal, said first or second SIP terminal being able to adapt a man-machine interface as a function of said at least one authorized codec.

13. Computer program comprising instructions for the execution of the steps of the processing method according to any one of Claims 1 to 12, when said program is executed by a computer.

14. Information medium readable by a computer and comprising instructions of a computer program according to Claim 13.

15. Device (1; 17) for processing SIP messages, intended for a telecommunication network (15) comprising a residential gateway (1) linked to an IMS network core (16) by an access link (18), at least one first SIP terminal (12, 19; 13, 20; 14, 9) and a second SIP terminal (12, 19; 13, 20; 14, 9) which are linked locally to said residential gateway (1), said first SIP terminal being able to establish a first SIP session to the IMS network core by passing through said access link, said second SIP terminal being able to establish a second SIP session to the IMS network core by passing through said access link, said processing device comprising means for obtaining a bandwidth of said access link,
said processing device being **characterized in that** it comprises:
- means (23, 24; 25) for receiving a first SIP message (34, 51, 106, 112) relating to the first SIP session,
- means (23, 24; 25) for determining the bandwidth used by said first SIP session as a function of said first SIP message,
- means (23, 24; 25) for receiving a second SIP message (41, 81, 111, 151) relating to the second SIP session,
- means (23, 24; 25) for determining an authorized bandwidth for said second SIP session as a function of the bandwidth of the access link and of the bandwidth used by the first SIP session, and
- means (23, 24; 25) for dispatching a third SIP message (43, 61, 91, 114, 131, 161) to said first terminal, said second terminal or said IMS network core, said third message being determined at least as a function of said authorized bandwidth for said second SIP session, said third SIP message being intended to influence a selection of the bandwidth for the first SIP session or the second SIP session.

16. Residential gateway comprising a processing device according to Claim 15.
